# EUROPÄISCHE PATENTSCHRIFT

(11) **EP 3 622 341 B1**
(45) Veröffentlichungstag und Bekanntmachung des Hinweises auf die Patenterteilung: **23.12.2020**
(21) Anmeldenummer: 18728040.9
(22) Anmeldetag: 07.05.2018
(51) Int. Cl.: G02B 27/01, H04N 13/395, G02B 30/52

(54) **KRAFTFAHRZEUG-ANZEIGEVORRICHTUNG SOWIE KRAFTFAHRZEUG**
MOTOR VEHICLE DISPLAY DEVICE AND MOTOR VEHICLE
DISPOSITIF D'AFFICHAGE DE VÉHICULE À MOTEUR AINSI QUE VÉHICULE À MOTEUR

(30) Priorität: 09.05.2017 DE 102017207799
(43) Veröffentlichungstag der Anmeldung: 18.03.2020
(73) Patentinhaber: AUDI AG, 85045 Ingolstadt (DE)
(72) Erfinder: KNITTL, Thomas, 85049 Ingolstadt (DE); ZEINAR, Peter, 85049 Ingolstadt (DE); HÉLOT, Jacques, 85051 Ingolstadt (DE); HOTTINGER, Alexander, 85051 Ingolstadt (DE); SICHWARDT, Xenia, 85055 Ingolstadt (DE)
(86) Internationale Anmeldenummer: PCT/EP2018/061710
(87) Internationale Veröffentlichungsnummer: WO 2018/206499

(56) Entgegenhaltungen:
- EP-A2- 0 959 377
- WO-A1-2006/057157
- WO-A1-2012/045251
- US-A1- 2005 156 813
- US-A1- 2012 287 125
- US-A1- 2013 265 646

## Beschreibung

Die Erfindung betrifft eine Kraftfahrzeug-Anzeigevorrichtung sowie ein Kraftfahrzeug mit einer derartigen Kraftfahrzeug-Anzeigevorrichtung.

Es ist bekannt, in Kraftfahrzeugen Informationen für einen Fahrer und eventuell auch für einen Mitfahrer anhand einer Anzeigevorrichtung oder anhand eines sogenannten Head-up-Displays anzuzeigen. Zur besseren Orientierung des jeweiligen Kraftfahrzeuginsassen und/oder für Informations- und Unterhaltungszwecke entsteht nämlich der Bedarf, Navigationshinweise, Informationen von einem Infotainmentsystem und/oder Warnhinweise bedarfsgerecht und gut einsehbar für den jeweiligen Kraftfahrzeuginsassen anzuzeigen. Die jeweilige Information wird in bekannter Weise in Form eines Anzeigeobjekts auf einer Anzeigefläche der Anzeigevorrichtung oder des Head-up-Displays eingeblendet.

Aus der DE 10 2007 018 073 A1 und aus der DE 10 2007 018 075 A1 ist jeweils ein Verfahren zum Anzeigen einer digitalen Karte in einem Fahrzeug und eine Anzeigeeinrichtung hierfür bekannt. Die Anzeigeeinrichtung macht sich eine kombinierte Anordnung eines Displays mit einem planaren, semitransparenten Spiegel zunutze, um für einen Betrachter der Anzeigeeinrichtung ein virtuelles, der Anzeigeeinrichtung vorgelagertes Bild erscheinen zu lassen.

Aus der DE 10 2014 019 122 A1 ist ein Anzeigesystem und ein Kraftwagen mit einem Anzeigesystem bekannt, bei welcher mittels einer Anzeigeeinrichtung unter Vermittlung einer Spiegelanordnung ein erstes Objekt und ein zweites Objekt in zwei hintereinander angeordneten virtuellen Bildebenen angezeigt werden.

Bei den bekannten, für ein Kraftfahrzeug vorgesehenen Anzeigevorrichtungen ist es jedoch nicht möglich, oder nur unter Zuhilfenahme weiterer Spiegelanordnungen möglich, mehr als zwei virtuelle Anzeigeebenen im Kraftfahrzeug für einen Kraftfahrzeuginsassen anzuzeigen. Dadurch ist ein Tiefen-Effekt oder ein 3D-Effekt, welcher sich für den Kraftfahrzeuginsassen bei Betrachtung der Anzeigevorrichtung mit den eingeblendeten Anzeigeobjekten ergeben sollte, begrenzt.

Aus der US2012287125 A1 ist eine Anzeigevorrichtung bekannt, in der parallel zueinander angeordnete Anzeigeoberflächen einen Spiegelschacht ausbilden.

Es ist daher Aufgabe der vorliegenden Erfindung, eine gattungsgemäße Kraftfahrzeug-Anzeigevorrichtung derart weiterzuentwickeln, dass eine möglichst realistische Darstellung von Informationen im Kraftfahrzeug bereitgestellt wird.

Diese Aufgabe wird durch die Gegenstände der unabhängigen Patentansprüche gelöst. Vorteilhafte Weiterbildungen der Erfindung sind durch die Unteransprüche, die folgende Beschreibung und die Figuren offenbart.

Die vorliegende Erfindung basiert auf der Erkenntnis, dass eine Darstellung von verschiedenen Anzeigeobjekten auf einer Anzeigeoberfläche einer Kraftfahrzeug-Anzeigevorrichtung als besonders realistisch empfunden wird, wenn eine Anzeige der verschiedenen Anzeigeobjekten auf verschiedenen virtuellen Anzeigeebenen verteilt ist. Die verschiedenen virtuellen Anzeigeebenen weisen jeweils einen unterschiedlichen virtuellen Abstand zu der Anzeigeoberfläche auf, sodass sich für einen Betrachter der Anzeigeoberfläche der Effekt ergibt, dass die auf den virtuellen Anzeigeebenen dargestellten Anzeigeobjekten hintereinander angeordnet sind und/oder unterschiedlich weit von dem Auge des Betrachters entfernt sind.

Die vorliegende Erfindung basiert weiterhin auf der Erkenntnis, dass durch zwei parallel angeordnete, spiegelnde Anzeigeoberflächen eine Vielzahl von virtuellen Anzeigeebenen parallel zu den Anzeigeoberflächen entstehen. Die erfindungsgemäße Kraftfahrzeug-Anzeigevorrichtung zum Anzeigen wenigstens eines Anzeigeobjekts umfasst also zwei Anzeigeeinrichtungen, welche jeweils eine Anzeigeoberfläche aufweisen, wobei zumindest eine der beiden Anzeigeeinrichtungen dazu eingerichtet ist, das wenigstens eine Anzeigeobjekt in einem ersten vorbestimmten Teilbereich auf der jeweiligen Anzeigeoberfläche zu erzeugen. Bei den beiden Anzeigeeinrichtungen kann es sich also um bereits bekannte Bildschirme oder Displays handeln, welche beispielsweise mittels eines Leuchtmittels ein vorbestimmtes leuchtendes Abbild des Anzeigeobjekts in einem vorbestimmten Bereich auf der Anzeigeoberfläche einblenden. Derjenige Bereich der Anzeigeoberfläche, an dem das Anzeigeobjekt zum ersten Mal durch die Anzeigeeinrichtung erzeugt und infolgedessen eingeblendet wird, ist im Folgenden als der erste vorbestimmte Teilbereich bezeichnet.

Erfindungsgemäß weisen die beiden Anzeigeeinrichtungen zusätzlich zu der Fähigkeit, das wenigstens eine Anzeigeobjekt zu erzeugen und auf der Anzeigeoberfläche einzublenden, auch die Eigenschaft auf, zu spiegeln. Die jeweiligen Anzeigeoberflächen sind hierzu als spiegelnde Anzeigeoberflächen ausgebildet. Dabei sind die jeweiligen Anzeigeoberflächen der beiden Anzeigeeinrichtung parallel zueinander angeordnet und derart einander zugewandt, dass sich die Anzeigeoberflächen ineinander spiegeln. Die Anzeigeoberflächen der ersten Anzeigeeinrichtung spiegelt sich also in der Anzeigeoberfläche der zweiten Anzeigeeinrichtung und umgekehrt. Ein erstes virtuelles Bild, welches durch eine Spiegelung der Anzeigeoberfläche der ersten Anzeigeeinrichtung in der Anzeigeoberfläche der zweiten Anzeigeeinrichtung entsteht, spiegelt sich dann wiederum an der Anzeigeoberfläche der ersten Anzeigeeinrichtung. Nach einer Vielzahl von derartigen Spiegelungen entsteht somit eine Vielzahl von virtuellen Anzeigeebenen, die sich parallel zu den beiden Anzeigenoberflächen ausbilden, und die jeweils ein Bild einer der beiden Anzeigeoberflächen darstellen.

Die beiden parallelen, zueinander gewandten Anzeigeoberflächen bilden somit einen Spiegelschacht, sodass sich innerhalb des Spiegelschachts das wenigstens eine in dem ersten vorbestimmten Teilbereich auf einer der beiden Anzeigeoberflächen erzeugte Anzeigeobjekt eine vorgebbare Anzahl an Spiegelungen durchläuft. Zwischen den beiden parallelen Anzeigeoberflächen bildet sich also eine Art Hohlraum aus, wobei zwei gegenüberliegende Seiten, die diesen Hohlraum begrenzen, durch die spiegelnden Anzeigeoberflächen gegeben sind. Dieser Hohlraum, welcher den Spiegelschacht bildet, kann sich entlang einer Längsrichtung der beiden Anzeigeoberflächen erstrecken. Der Spiegelschacht kann somit eine gleiche Länge wie eine Länge von zumindest einer der beiden Anzeigeoberflächen aufweisen. Ebenso kann eine Breite des Spiegelschachts einer Breite zumindest einer der beiden Anzeigeoberflächen entsprechen. Mit Ausnahme der beiden spiegelnden, parallelen Anzeigeoberflächen kann der Spiegelschacht offen sein und/oder kann zumindest eine weitere Fläche den Spiegelschacht begrenzen. Die weitere Fläche kann als eine Licht-absorbierende Fläche ausgebildet sein, um ungewünschte weitere Spiegelungen innerhalb des Spiegelschachts zu vermeiden. Die weitere Fläche kann aber auch als eine spiegelnde Fläche ausgebildet sein, um eine gewünschte Spiegelung innerhalb des Spiegelschachts zu unterstützen.

Erfindungsgemäß ist zumindest ein zweiter vorbestimmter Teilbereich der Anzeigeoberfläche der ersten Anzeigeeinrichtung außerhalb des Spiegelschachts angeordnet. Beispielsweise ist die Anzeigeoberfläche der ersten Anzeigeeinrichtung in Längsrichtung länger als die Anzeigeoberfläche der zweiten Anzeigeeinrichtung. Der Spiegelschacht kann sich somit ausschließlich entlang sich in einer zu den beiden Anzeigeoberflächen parallelen Ebene überlappende Teilbereiche der beiden Anzeigeoberflächen ausbilden. Der zweite vorbestimmte Teilbereich kann somit als eine Art Verlängerung der Anzeigeoberfläche der ersten Anzeigeeinrichtung in Längsrichtung des Spiegelschachts ausgestaltet sein. Der zweite vorbestimmte Teilbereich bezeichnet somit einen Bereich auf der Anzeigeoberfläche der ersten Anzeigeeinrichtung, welcher sich außerhalb des Spiegelschachts befindet, sodass dieser zweite vorbestimmte Teilbereich festgelegt ist.

Die Kraftfahrzeug-Anzeigevorrichtung ist dazu eingerichtet, das wenigstens eine in dem ersten vorbestimmten Teilbereich erzeugte Anzeigeobjekt nach einer vorgebbaren Anzahl von Spiegelungen innerhalb des Spiegelschachts in den zweiten vorbestimmten Teilbereich der ersten Anzeigeeinrichtung zu spiegeln. Dabei ist es unerheblich, ob sich der erste vorbestimmte Teilbereich, auf welchem das Anzeigeobjekt erzeugt wird, auf der ersten Anzeigeeinrichtung oder auf der zweiten Anzeigeeinrichtung befindet. Die Kraftfahrzeug-Anzeigevorrichtung kann insbesondere dazu eingerichtet sein, dass die vorgebbare Anzahl von Spiegelungen mindestens drei beträgt. Ein von dem wenigstens einen Anzeigeobjekt ausgehender Lichtstrahl wird also innerhalb des Spiegelschachts ausgehend von dem ersten vorbestimmten Teilbereich zwischen den beiden Anzeigeoberflächen hin und her reflektiert, bis der Lichtstrahl in den zweiten vorbestimmten Teilbereich gelangt. Der Lichtstrahl kann sich insbesondere mindestens dreimal hin und her reflektieren. Durch die Reflexion im Spiegelschacht ist das wenigstens eine Anzeigeobjekt in dem zweiten vorbestimmten Teilbereich einsehbar. Hierfür wird das wenigstens eine Anzeigeobjekt auf zumindest einer virtuellen Anzeigeebene angezeigt, wobei sich die zumindest eine virtuelle Anzeigeebene in einem Sichtbereich des zweiten vorbestimmten Teilbereichs der ersten Anzeigeeinrichtung hinter dieser bildet. Die zumindest eine virtuelle Anzeigeebene ist also von der Anzeigeoberfläche der ersten Anzeigeeinrichtung abgewandt. Die virtuelle Anzeigeebene kann einen vorbestimmten Schnittwinkel zu der Anzeigeoberfläche der ersten Anzeigeeinrichtung aufweisen. Ein Betrachter, der seinen Blickwinkel auf den zweiten vorbestimmten Teilbereich richtet, kann somit das wenigstens eine Anzeigeobjekt mit einer Tiefenwirkung relativ zu der ersten Anzeigeoberfläche einsehen. Dabei kann die Anzeigeebene, auf welches wenigstens eine Anzeigeobjekt abgebildet wird, aus dem bestimmten Blickwinkel betrachtet einen vorbestimmten virtuellen Abstand zu der Anzeigeoberfläche der ersten Anzeigeeinrichtung aufweisen, wobei der vorbestimmte Abstand abhängig ist von der Anzahl von Spiegelungen des Anzeigeobjekts innerhalb des Spiegelschachts. Der virtuelle Abstand des wenigstens einen in dem zweiten vorbestimmten Teilbereich einsehbaren Anzeigeobjekts zu diesem zweiten vorbestimmten Teilbereich kann also mit einer Wegstrecke, die der Lichtstrahl ausgehend von dem ersten vorbestimmten Teilbereich zurücklegen musste, um in den zweiten vorbestimmten Teilbereich zu gelangen, korreliert sein. Je länger die zurückgelegte Wegstrecke des Lichtstrahls, desto größer ist beispielweise der virtuelle Abstand.

Die beiden Anzeigeeinrichtungen können jeweils mehrere Anzeigeobjekte in verschiedenen Bereichen auf der jeweiligen Anzeigeoberfläche erzeugen. Jedes dieser Anzeigeobjekte weist in diesem Fall also einen unterschiedlichen ersten vorbestimmten Teilbereich auf. Von jedem dieser Anzeigeobjekte geht also ein unterschiedlicher Lichtstrahl aus, welcher eine unterschiedlichen Wegstrecke zurücklegt, um in den zweiten vorbestimmten Teilbereich reflektiert zu werden. Je nach Wegstrecke ergibt sich also bei einer Betrachtung des zweiten Teilbereichs eine unterschiedliche Tiefe des jeweiligen Anzeigeobjekts. Mit anderen Worten weist das virtuelle Bild der Anzeigeobjekte je nach Länge der Wegstrecke des von dem jeweiligen Anzeigeobjekt ausgehenden Lichtstrahls einen unterschiedlichen virtuellen Abstand zu dem zweiten vorbestimmten Teilbereich der ersten Anzeigeeinrichtung auf. Es entstehen daher eine Vielzahl von virtuellen Anzeigeebenen, die parallel hintereinander, von der Anzeigeoberfläche der ersten Anzeigeeinrichtung abgewandt, angeordnet sind. Hierdurch ergibt sich der Effekt, dass die unterschiedlichen Anzeigeobjekte unterschiedlich weit entfernt von dem zweiten vorbestimmten Teilbereich erscheinen. Betrachtet also ein Kraftfahrzeuginsasse die Kraftfahrzeug-Anzeigevorrichtung, so werden ihm verschiedene Informationen, wie beispielsweise in Form eines Navigationspfeils und/oder eines Tachometers und/oder einer Zahl und/oder einem Symbol und/oder einer Buchstabenabfolge, derart in den zweiten Teilbereich der ersten Anzeigeeinrichtung dargestellt, dass sich für den Betrachter ein räumlicher Tiefen-Effekt ergibt. Dadurch ergibt sich der Vorteil, dass die Anzeige als besonders realistisch empfunden wird.

Weiterhin ergibt sich durch den erfindungsgemäßen Aufbau der Kraftfahrzeug-Anzeigevorrichtung eine besonders kompakte Vorrichtung, die bei einem Einbau in einem Kraftfahrzeug wenig Platz benötigt. Die platzsparende Kraftfahrzeug-Anzeigevorrichtung ergibt sich einerseits durch die Tatsache, dass die beiden Anzeigeeinrichtungen der Kraftfahrzeug-Anzeigevorrichtung eine Doppelfunktion ausüben, nämlich das Anzeigeobjekt zu erzeugen und zu spiegeln, sodass kein weiterer Spiegel und/oder keine weitere Bilderzeugungsvorrichtung benötigt wird. Andererseits ergibt sich die platzsparende Kraftfahrzeug-Anzeigevorrichtung durch die parallele Ausrichtung der beiden Anzeigeeinrichtungen. Ein Abstand zwischen den beiden Anzeigeoberflächen kann gering gehalten werden, ohne den Spiegelungs- und Tiefeneffekt im zweiten vorbestimmten Teilbereich der ersten Anzeigeeinrichtung zu verändern. So kann die Kraftfahrzeug-Anzeigevorrichtung zumindest in Richtung eines Normalenvektors zu den Anzeigeoberflächen kompakt gehalten werden. Durch die kompakte Kraftfahrzeug-Anzeigevorrichtung ergibt sich zusätzlich der Vorteil, dass eine besonders kostengünstige und baumaterialsparende Anzeigevorrichtung für ein Kraftfahrzeug bereitgestellt wird.

Die Erfindung umfasst auch Weiterbildungen der erfindungsgemäßen Kraftfahrzeug-Anzeigevorrichtung, durch die sich zusätzliche Vorteile ergeben.

Eine vorteilhafte Weiterbildung der Kraftfahrzeug-Anzeigevorrichtung sieht vor, dass in Abhängigkeit von einer Position des ersten vorbestimmten Teilbereichs des wenigstens ein Anzeigeobjekts auf der jeweiligen Anzeigeoberfläche der Abstand der virtuellen Anzeigeebene, auf welcher das wenigstens eine Anzeigeobjekt angezeigt wird, zu der Anzeigeoberfläche der ersten Anzeigeeinrichtung einstellbar ist. Mit anderen Worten kann eine Position eines oder mehrerer Anzeigeobjekte auf der Anzeigeoberfläche der ersten und/oder der zweiten Anzeigeeinrichtung derart gewählt sein, dass ein vorbestimmter virtueller Abstand zwischen dem jeweiligen virtuellen Abbild des jeweiligen Anzeigeobjekts und dem zweiten vorbestimmten Teilbereich der ersten Anzeigeeinrichtung entsteht. Die Kraftfahrzeug-Anzeigevorrichtung kann somit dazu eingerichtet sein, zu steuern, welches Anzeigeobjekt im Vordergrund angezeigt werden soll, welches Anzeigeobjekt im Hintergrund angezeigt werden soll. Beispielsweise werden als wichtig eingestufte Informationen mittels eines ersten Anzeigeobjekts dargestellt, welches im Vordergrund im zweiten vorbestimmten Teilbereich angezeigt wird. Der erste vorbestimmte Teilbereich dieses ersten Anzeigeobjekts ist relativ nah an dem zweiten vorbestimmten Teilbereich, sodass das von diesem ersten Anzeigeobjekt ausgehende Licht einen relativ kurzen Weg zu dem zweiten vorbestimmten Teilbereich zurücklegen muss. Im Gegensatz dazu wird eine als unwichtigere eingestufte Information mittels eines zweiten Anzeigeobjekts dargestellt, welches im Hintergrund, also hinter dem ersten Anzeigeobjekt, in dem zweiten vorbestimmten Teilbereich angezeigt wird. Die Entfernung des ersten vorbestimmten Teilbereichs des zweiten Anzeigeobjekts zu dem zweiten vorbestimmten Teilbereich ist hierfür größer als die Entfernung des ersten vorbestimmten Teilbereichs des ersten Anzeigeobjekts zu dem zweiten vorbestimmten Teilbereich.

Die Reihenfolge der angezeigten Anzeigeobjekte im zweiten vorbestimmten Teilbereich kann veränderbar sein. Hierzu können die beiden Anzeigeeinrichtungen die jeweiligen Anzeigeobjekte je nach Bedarf an unterschiedlichen Positionen auf den Anzeigeoberflächen einblenden und die Positionen untereinander wechseln. Beispielsweise wird mittels des ersten Anzeigeobjekts eine Geschwindigkeitsmessung des Kraftfahrzeugs dargestellt, welche zunächst im Vordergrund im zweiten vorbestimmten Teilbereich für den Fahrer einsehbar ist. Ein zweites Anzeigeobjekt stellt daraufhin eine Warnungsmeldung dar, die im Nachhinein erzeugt wurde. Ist die Information der Warnungsmeldung als wichtiger eingestuft als die Information über die Geschwindigkeit des Kraftfahrzeugs, ist die Kraftfahrzeug-Anzeigevorrichtung dazu eingerichtet, eine Position der Einblendung der Warnungsmeldung auf einer der beiden Anzeigeoberflächen derart zu wählen, dass die Wegstrecke des von der Warnungsmeldung ausgehenden Lichts im ersten vorbestimmten Teilbereich zu dem zweiten vorbestimmten Teilbereich kürzer ist als diejenige Wegstrecke von der Geschwindigkeitsmessung im ersten vorbestimmten Teilbereich.

Beispielsweise kann die Kraftfahrzeug-Anzeigevorrichtung auch dazu genutzt werden, mittels der verschiedenen virtuellen Anzeigeebenen ein dreidimensionales Bild zu erzeugen. Hierzu kann sich ein Anzeigeobjekt über eine Gesamtfläche einer der beiden Anzeigeoberflächen erstrecken. Verschiedene Bereiche des Anzeigeobjekts erscheinen im zweiten vorbestimmten Teilbereich unterschiedlich weit entfernt. Hierdurch ergibt sich der Vorteil, dass eine intuitive Bedienung der Kraftfahrzeug-Anzeigevorrichtung gefördert wird.

Eine weitere vorteilhafte Ausführungsform der Erfindung sieht vor, dass die Kraftfahrzeug-Anzeigevorrichtung eine Lichtabschirmung umfasst. Die Lichtabschirmung erstreckt sich derart entlang zumindest einer an den beiden Anzeigeoberflächen angrenzenden Fläche, dass der Spiegelschacht von einem außerhalb des Spiegelschachts einfallendem Licht durch die Lichtabschirmung zumindest teilweise abgeschirmt ist. Die Lichtabschirmung kann den Spiegelschacht auch vollständig von dem außerhalb des Spiegelschachts einfallen dem Licht abschirmen. Die Lichtabschirmung kann zumindest eine begrenzende Wand des Hohlraums bilden. Mit anderen Worten kann die Lichtabschirmung zumindest eine weitere Seite des Spiegelschachts darstellen, welche beispielsweise nicht durch die parallelen Anzeigeoberflächen der beiden Anzeigeeinrichtungen gegeben ist. Der Spiegelschacht kann beispielsweise quaderförmig sein, wobei zwei gegenüberliegende, parallele Seiten des Quaders jeweils durch eine Anzeigeoberfläche gegeben sind. Zumindest eine weitere Seite des Spiegelschachts kann dann durch die Lichtabschirmung gegeben sein. Die Lichtabschirmung kann auch derart gestaltet sein, dass alle Seiten des Spiegelschachts, welche nicht durch die Anzeigeoberflächen gebildet sind, durch die Lichtabschirmung geschlossen sind. Beispielsweise ist die Lichtabschirmung als ein Lichtabsorbierendes Abdeckungsteil ausgestaltet, welches sich über die eine weitere Seite des Spiegelschachts erstreckt. Das Abdeckungsteil kann aus Plastik oder einem Stoff-Material gebildet sein. Die Lichtabschirmung kann so gestaltet sein, dass sie die beiden Anzeigeeinrichtungen, mit Ausnahme von dem zweiten vorbestimmten Teilbereich der ersten Anzeigeeinrichtung, vollständig umgibt. Durch die Lichtabschirmung ergibt sich der Vorteil, dass die Spiegelungen des wenigstens einen Anzeigeobjekts innerhalb des Spiegelschachts nicht durch äußeres, nicht durch das wenigstens eine Anzeigeobjekt selbst erzeugtes Licht beeinflusst werden. Auch kann durch die Lichtabschirmung vermieden werden, dass weitere, ungewünschte Spiegelungen im Spiegelschacht entstehen. So kann der Spiegelungseffekt im zweiten vorbestimmten Teilbereich garantiert werden.

In einer weiteren vorteilhaften Weiterbildung der Erfindung umfasst die Kraftfahrzeug-Anzeigevorrichtung ein Umlenkelement. Das Umlenkelement ist derart zu dem zweiten vorbestimmten Teilbereich der ersten Anzeigeeinrichtung gewandt, dass das wenigstens eine in den zweiten vorbestimmten Teilbereich gespiegelte Anzeigeobjekt zu dem Umlenkelement hin gespiegelt wird. Das Umlenkelement ist weiterhin dazu eingerichtet, das auf das Umlenkelement hin gespiegelte wenigstens eine Anzeigeobjekt derart umzulenken, dass das wenigstens eine Anzeigeobjekt auf zumindest einer virtuellen Anzeigeebene angezeigt wird, wobei die zumindest eine virtuelle Anzeigeebene einen vorbestimmten Schnittwinkel zu einer zu den Anzeigeoberflächen parallelen Ebene ausbildet. Mit anderen Worten spiegelt sich der zweite vorbestimmte Teilbereich der ersten Anzeigeeinrichtung in dem Umlenkelement. Das Umlenkelement kann beispielsweise als eine Scheibe oder ein Glas ausgebildet sein und/oder beispielsweise einen vorbestimmten Brechungsindex aufweisen. Das Umlenkelement ist also dazu ausgebildet, die in dem zweiten vorbestimmten Teilbereich eintreffende und sich an dem zweiten vorbestimmten Teilbereich reflektierende Lichtstrahlen umzulenken oder umzuleiten. Der vorbestimmte Schnittwinkel kann derart gewählt sein, dass die virtuellen Anzeigeebenen, die hinter der Anzeigeoberfläche der ersten Anzeigeeinrichtung entstehen, nun hinter dem Umlenkelement entstehen. Ein Betrachter des Umlenkelements, welcher beispielsweise seinen Blickwinkel auf eine Vorderseite des Umlenkelements richtet, nimmt nun eine Reihe von hintereinander angeordneten virtuellen Anzeigeebenen hinter der Vorderseite des Umlenkelements wahr.

In Längsrichtung des Spiegelschachts betrachtend kann das Umlenkelement oberhalb der beiden Anzeigeoberflächen angeordnet sein. Der von dem wenigstens einen Anzeigeobjekt ausgehende Lichtstrahl spiegelt sich dann entlang der Spiegelschachts von einem unteren Bereich nach oben in Richtung des Umlenkelements, wobei ein oberes Ende der Anzeigeoberfläche der ersten Anzeigeeinrichtung den zweiten vorbestimmten Teilbereich ausbildet. Das Umlenkelement kann genauso breit wie zumindest eine der beiden Anzeigeoberflächen sein. Durch die Umlenkung der virtuellen Anzeigeebenen ergibt sich der Vorteil, dass ein relativ der Abstand der einzelnen Anzeigeebene zueinander vergrößert und/oder verzerrt werden kann, sodass die einzelnen Anzeigeobjekte auf den verschiedenen Anzeigenebenen deutlicher voneinander abgestuft werden können. Der durch die unterschiedlichen Abstände sich ergebende Tiefen-Effekt der einzelnen Anzeigeobjekte kann dadurch verstärkt sein. Ergibt sich durch das Umlenkelement der Vorteil, dass die verschiedenen Anzeigeebenen in einem Blickwinkel einsehbar werden, welcher für beispielsweise den Fahrer leichter anzunehmen ist. Beispielsweise bildet das Umlenkelement zumindest bereichsweise eine Windschutzscheibe eines Kraftfahrzeugs. Die virtuellen Anzeigeebenen werden dann hinter der Windschutzscheibe angezeigt. Der Fahrer kann dann beim Betrachten der Windschutzscheibe die virtuellen Anzeigeebenen hinter der Windschutzscheibe sehen und muss seinen Blick nicht von der Windschutzscheibe abwenden.

In einer erfindungsgemäßen Kraftfahrzeug-Anzeigevorrichtung ist vorgesehen, dass zumindest eine der beiden Anzeigeeinrichtungen dazu eingerichtet ist, eine Helligkeit des wenigstens einen erzeugten Anzeigeobjekts in Abhängigkeit von einer Position des ersten vorbestimmten Teilbereichs zu variieren. Mit anderen Worten kann zumindest eine der beiden Anzeigeeinrichtungen je nach der Position, an welcher das wenigstens eine Anzeigeobjekts eingeblendet werden soll, die Helligkeit des zu einblendenden Anzeigeobjekts verändern. Die Helligkeit des wenigstens einen erzeugten Anzeigeobjekts kann mit einem Abstand des ersten vorbestimmten Teilbereichs zu dem zweiten vorbestimmten Teilbereich korreliert sein. Beispielsweise wird das Anzeigeobjekts umso heller in dem ersten vorbestimmten Teilbereich eingeblendet, je größer der Abstand des ersten vorbestimmten Teilbereichs zu dem zweiten vorbestimmten Bereich ist. Entlang einer Längsrichtung zumindest einer der beiden Anzeigeoberflächen kann also eine jeweilige Helligkeit der jeweiligen Anzeigeeinrichtung variieren. Dadurch ergibt sich der Vorteil, dass einem Verdunkelungseffekt, welcher eintritt, je öfter sich das wenigstens eine Anzeigeobjekts spiegelt, entgegengewirkt wird. Bei jeder Spiegelung des Anzeigeobjekts in der jeweils gegenüberliegenden Anzeigeoberfläche geht nämlich Licht verloren, sodass das Anzeigeobjekts nach und nach in den höheren Ordnungen der Spiegelung dunkler erscheint. Je öfter sich das Anzeigeobjekt spiegeln muss, um in dem zweiten vorbestimmten Teilbereich hin gespiegelt zu werden, umso kleiner und dunkler wird es in der virtuellen Anzeigeebene in den zweiten vorbestimmten Teilbereich angezeigt. Die Helligkeit kann auf der zumindest einen Anzeigeoberfläche derart variieren, dass die Helligkeit des in dem zweiten vorbestimmten Teilbereich angezeigten Objekts unabhängig von der virtuellen Anzeigeebene gleichbleibend ist. Somit wird es möglich, im zweiten Teilbereich eine Vielzahl von virtuellen Anzeigeebenen einsehbar zu gestalten, insbesondere wenigstens drei und/oder insbesondere wenigstens vier virtuelle Anzeigeebenen.

Eine weitere vorteilhafte Ausführungsform sieht vor, dass die Anzeigeoberfläche zumindest einer der beiden Anzeigeeinrichtungen in einer Längsrichtung der jeweiligen Anzeigeeinrichtung unterschiedliche Reflexionsgrade aufweist. Mit anderen Worten weist zumindest eine der beiden Anzeigeoberflächen in ihrer Längsrichtung unterschiedliche Spiegelungseigenschaften auf. Durch die unterschiedlichen Reflexionsgrade wird ein unterschiedlicher Anteil des Lichts an der jeweiligen Stelle auf der Anzeigeoberfläche einer der beiden Anzeigeeinrichtungen reflektiert. Hierzu kann zumindest eine der beiden Anzeigeeinrichtungen zumindest zwei oder mehrere Anzeigeoberflächen aufweisen, welche jeweils unterschiedliche Reflexionsgrade aufweisen. Die zumindest zwei oder mehrere Anzeigeoberflächen können aneinander Grenzen, sodass sie eine insgesamt einheitliche Anzeigeoberfläche ausbilden. Mit anderen Worten kann die Anzeigeoberfläche zumindest einer Anzeigeeinrichtung in mehreren Teilbereichen gestückelt sein, wobei die Teilbereiche jeweils einen unterschiedlichen Reflexionsgrad aufweisen. Je weiter entfernt ein Teilbereich der Anzeigeeinrichtung von dem zweiten vorbestimmten Teilbereich der ersten Anzeigeeinrichtung entfernt ist, desto größer kann der Reflexionsgrad dieses Teilbereiches sein. Beispielsweise kann durch unterschiedliche Spiegelungsfolien, welche auf die Anzeigeoberfläche aufgelegt werden, unterschiedliche Reflexionsgrade ermöglicht werden. Dadurch, dass unterschiedliche Bereiche der Anzeigeoberfläche unterschiedlich stark spiegeln können, ergibt sich der Vorteil, dass eine Lichtintensität eines Anzeigeobjekts, welches in einem weiter entfernten Bereich von dem zweiten Teilbereich erzeugt wird und sich dadurch öfters im Spiegelschacht spiegeln muss, um in den zweiten Teilbereich angezeigt zu werden, durch den hohen Reflexionsgrad relativ gut beibehalten wird. Die Anzeigeobjekte auf den hinteren, im zweiten Teilbereich einsehbaren virtuellen Anzeigeebenen können dann genauso hell wie Anzeigeobjekte auf den vorderen Anzeigeebenen erscheinen. Die unterschiedlichen Reflexionsgrade eine Anzeigeoberfläche können also einen Verlust der Lichtintensität durch die Vielzahl von Spiegelungen im Spiegelschacht kompensieren.

Das erfindungsgemäße Kraftfahrzeug weist die beschriebene Kraftfahrzeug-Anzeigevorrichtung auf. Vorzugsweise ist die Kraftfahrzeug-Anzeigevorrichtung in einer Scheibenwurzel des Kraftfahrzeugs, also demjenigen Bereich, in welchem eine Windschutzscheibe an ein Armaturenbrett des Kraftfahrzeugs angrenzt, angeordnet.

Bevorzugt sind die beiden Anzeigeeinrichtungen der Kraftfahrzeug-Anzeigevorrichtung zumindest teilweise durch das Armaturenbrett verdeckt. Dabei kann nur der zweite vorbestimmte Teilbereich der Anzeigeoberfläche der ersten Anzeigeeinrichtung sich aus dem Armaturenbrett heraus erstrecken. Der restliche Bereich der Anzeigeoberfläche der ersten Anzeigeeinrichtung kann dann durch eine Aussparung im Armaturenbrett aufgenommen werden. Ebenso kann eine weitere Aussparung im Armaturenbrett die zweite Anzeigeeinrichtung aufnehmen. Dabei kann die zweite Anzeigeeinrichtung vollständig innerhalb des Armaturenbretts aufgenommen sein. Das Armaturenbrett kann somit die Lichtabschirmung der Kraftfahrzeug-Anzeigevorrichtung ausbilden.

Bevorzugt ist das Umlenkelement als zumindest einen Teilbereich einer Windschutzscheibe des Kraftfahrzeugs ausgebildet. Mit anderen Worten spiegelt sich der zweite vorbestimmte Teilbereich der ersten Anzeigeeinrichtung, welcher außerhalb des Armaturenbrettes angeordnet ist, in der Windschutzscheibe. Dieser lenkt die in dem zweiten vorbestimmten Teilbereich angezeigten virtuellen Anzeigeebenen in die Windschutzscheibe um. Aus einem Innenraum des Kraftfahrzeugs betrachtet sind die virtuellen Anzeigeebenen hinter der Windschutzscheibe angeordnet.

Bevorzugt erstreckt sich die jeweilige Anzeigeoberfläche der beiden Anzeigeeinrichtungen in Fahrzeug Querrichtung von einem Fahrersitzbereich bis zu ein Beifahrersitzbereich. Vorzugsweise können sich die beiden Anzeigeoberflächen über eine gesamte Breite der Windschutzscheibe erstrecken. So ergibt sich eine besonders große, dreidimensionale Informationsfläche zum Anzeigen des wenigstens einen Anzeigeobjekts im Kraftfahrzeug.

Die zuvor im Zusammenhang mit der erfindungsgemäßen Kraftfahrzeug-Anzeigevorrichtung beschriebenen Vorteile und Weiterbildungen gelten sinngemäß für das erfindungsgemäße Kraftfahrzeug. Aus diesem Grund sind die entsprechenden Weiterbildungen der erfindungsgemäßen Kraftfahrzeug-Anzeigevorrichtung hier nicht noch einmal beschrieben.

Im Folgenden sind Ausführungsbeispiele der Erfindung beschrieben. Hierzu zeigt:
- Fig. 1a: eine schematische Seitenansicht einer lediglich teilweise dargestellten Kraftfahrzeug-Anzeigevorrichtung zum Anzeigen wenigstens eines Anzeigeobjekts auf zumindest einer von einer Vielzahl von virtuellen Anzeigeebenen;
- Fig. 1b: eine schematische Seitenansicht eines lediglich teilweise dargestellten Kraftfahrzeugs mit drei beispielhaften Anordnungen der Kraftfahrzeug-Anzeigevorrichtung im Kraftfahrzeug;
- Fig. 1c: eine schematische Darstellung einer lediglich teilweise dargestellten Vorderansicht eines Kraftfahrzeug-Innenraums mit einem Armaturenbrett, innerhalb welchen die KraftfahrzeugAnzeigevorrichtung zumindest teilweise aufgenommen ist, und der Vielzahl von virtuellen Anzeigeebenen;
- Fig. 2a: eine schematische Seitenansicht der lediglich teilweise dargestellten Kraftfahrzeug-Anzeigevorrichtung, welche in einem hier lediglich ausschnitthaft dargestellten Kraftfahrzeug angeordnet ist und der Vielzahl von virtuellen Anzeigeebenen;
- Fig. 2b: eine schematische Darstellung einer lediglich teilweise dargestellten Vorderansicht eines Kraftfahrzeug-Innenraums mit einem Armaturenbrett, innerhalb welchen die KraftfahrzeugAnzeigevorrichtung zumindest teilweise aufgenommen ist, und in einer Windschutzscheibe dargestellt die Vielzahl von virtuellen Anzeigeebenen; und
- Fig. 3: eine schematische Seitenansicht zweier Ausführungsformen der jeweils lediglich teilweise dargestellten KraftfahrzeugAnzeigevorrichtung .

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

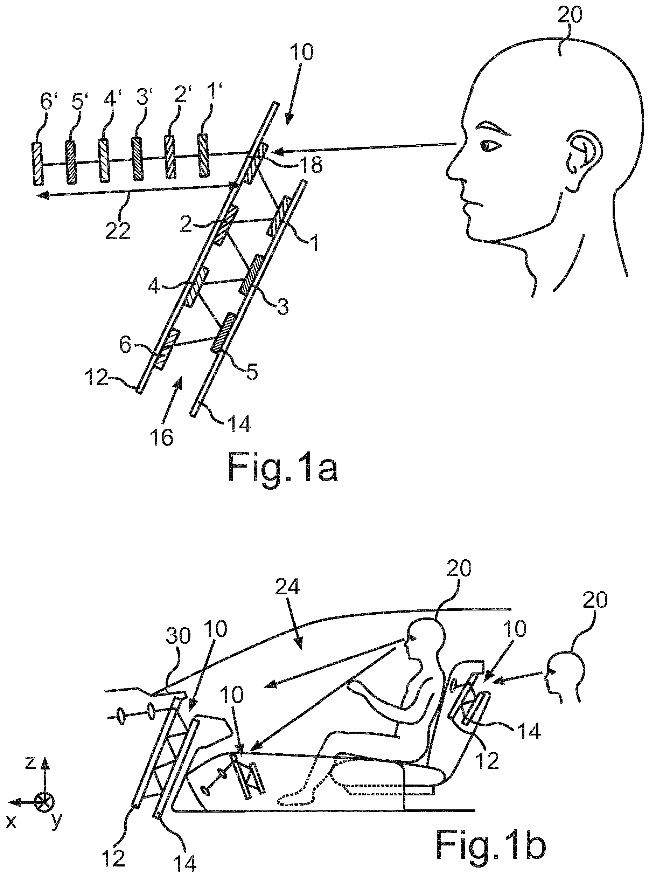

In Fig. 1a ist eine schematische Seitenansicht einer Kraftfahrzeug-Anzeigevorrichtung 10 lediglich teilweise dargestellt. Die Kraftfahrzeug-Anzeigevorrichtung 10 ist dazu eingerichtet, wenigstens ein Anzeigeobjekt auf zumindest einer von einer Vielzahl von virtuellen Anzeigeebenen 1', 2', 3', 4', 5', 6' anzuzeigen. Hierzu weist die Kraftfahrzeug-Anzeigevorrichtung 10 eine erste und eine zweite Anzeigeeinrichtung auf, welche jeweils eine Anzeigeoberfläche 12, 14 umfassen. In Fig. 1a sind lediglich in einer Seitenansicht die Anzeigeoberflächen 12, 14 der ersten und der zweiten Anzeigeeinrichtung dargestellt. Die beiden Anzeigeeinrichtungen können jeweils als ein flacher Bildschirm ausgebildet sein. Beispielsweise ist zumindest eine der beiden Anzeigeeinrichtungen als ein sogenanntes OLED-Display ausgebildet. Die beiden Anzeigeoberflächen 12, 14 sind parallel zueinander angeordnet und einander zugewandt, sodass sich zumindest ein Teilbereich der einen Anzeigeoberfläche 12, 14 in der jeweils anderen Anzeigeoberfläche 14, 12 spiegelt. In diesem Beispiel ist eine Länge der Anzeigeoberfläche 14 der zweiten Anzeigeeinrichtung kürzer als eine Länge der Anzeigeoberfläche 12 der ersten Anzeigeeinrichtung. Ein Spiegelschacht 16 bildet sich zwischen den beiden Anzeigeoberflächen 12, 14 aus, wobei der Spiegelschacht 16 die Länge der kürzeren Anzeigeoberfläche 14 aufweist. Der Spiegelschacht 16 kann genauso breit wie zumindest einer der beiden Anzeigeoberflächen 12, 14 sein. Eine Weite des Spiegelschachts 16 ergibt sich durch einen Abstand zwischen den beiden Anzeigeoberflächen 12, 14. Dieser kann gering gehalten werden, sodass die Kraftfahrzeug-Anzeigevorrichtung 10 insgesamt eine kleine Weite aufweisen kann.

An verschiedenen Stellen 1, 2, 3, 4, 5, 6 auf der jeweiligen Anzeigeoberfläche 12, 14 werden verschiedene Anzeigeobjekte durch die jeweilige Anzeigeeinrichtung erzeugt und auf der jeweiligen Anzeigeoberfläche 12, 14 eingeblendet. Diese Stellen 1, 2, 3, 4, 5, 6 werden im Folgenden als erste vorbestimmte Teilbereiche 1, 2, 3, 4, 5, 6 bezeichnet. Ausgehend von dem eingeblendeten Anzeigeobjekt wird ein Lichtstrahl aus dem ersten vorbestimmten Teilbereich 1, 2, 3, 4, 5, 6 zwischen den beiden Anzeigeoberflächen 12, 14 hin und her reflektiert. Das Anzeigeobjekt spiegelt sich somit in der jeweils gegenüberliegenden Anzeigeoberfläche 12, 14.

Die erste Anzeigeeinrichtung weist also eine längere Anzeigeoberfläche 12 auf als die Anzeigeoberfläche 14 der zweiten Anzeigeeinrichtung. Ein Teilbereich der Anzeigeoberfläche der ersten Anzeigeeinrichtung ist somit außerhalb des Spiegelschachts 16 angeordnet. Dieser Teilbereich im Folgenden als der zweite vorbestimmte Teilbereich 18 bezeichnet.

Von jedem eingeblendeten Anzeigeobjekt gelangt ein Teil des Lichtstrahls in den zweiten vorbestimmten Teilbereich 18. In den zweiten vorbestimmten Teilbereich 18 wird das wenigstens eine Anzeigeobjekt auf einer virtuellen Anzeigeebene 1', 2', 3', 4', 5', 6' dargestellt. Für einen Betrachter 20 der Kraftfahrzeug-Anzeigevorrichtung 10, der seinen Blick auf den zweiten vorbestimmten Teilbereich 18 richtet, erscheint das wenigstens eine Anzeigeobjekt auf einer virtuellen Anzeigeebene 1', 2', 3', 4', 5', 6' hinter dem zweiten vorbestimmten Teilbereich 18. Je nach Länge des Weges, dass das Licht von dem ersten vorbestimmten Teilbereich 1, 2, 3, 4, 5, 6 bis zum zweiten vorbestimmten Teilbereich 18 zurücklegen musste, erscheint ein virtueller Abstand 22 zwischen den virtuellen Anzeigeebenen 1', 2', 3', 4', 5', 6' und dem zweiten vorbestimmten Teilbereich 18 der Anzeigeoberfläche größer oder kleiner. Eine Länge einer Wegstrecke des Lichts von dem ersten vorbestimmten Teilbereich 1, 2, 3, 4, 5, 6 zu dem zweiten vorbestimmten Teilbereich 18 ist gleich dem Abstand 22 zwischen dem zweiten vorbestimmten Teilbereich 18 und der jeweiligen virtuellen Anzeigeebene 1', 2', 3', 4', 5', 6'. Je länger also der Spiegelschacht 16, desto öfter spiegelt sich ein Anzeigeobjekt zwischen den beiden Anzeigeoberflächen 12 und 14, und desto größer erscheint der virtuelle Abstand 22 im zweiten vorbestimmten Teilbereich 18.

Die in Fig. 1a in insgesamt sechs verschiedenen ersten vorbestimmten Teilbereichen 1, 2, 3, 4, 5, 6 dargestellten Anzeigeobjekte erscheinen im Blickwinkel des Betrachters 20 auf sechs hintereinander liegenden virtuellen Anzeigeebenen 1', 2', 3', 4', 5', 6' hinter dem zweiten vorbestimmten Teilbereich 18. Das in 1 eingeblendete Anzeigeobjekt hat sich dabei insgesamt einmal gespiegelt, um auf der virtuellen Anzeigeebene 1' dargestellt zu werden. Das in 2 eingeblendete Anzeigeobjekts hat sich analog zweimal gespiegelt, um auf der virtuellen Anzeigeebene 2' dargestellt zu werden. Je öfter sich das eingeblendete Anzeigeobjekt insgesamt spiegeln muss, um auf einer der virtuellen Anzeigeebene 1', 2', 3', 4', 5', 6' dargestellt zu werden, desto kleiner und dunkler erscheint es im zweiten vorbestimmten Teilbereich 18. Um diesen Effekt entgegenzuwirken, können die Anzeigeoberflächen 12, 14 dazu eingerichtet sein, ein Anzeigeobjekt umso heller einzublenden, je weiter entfernt das Anzeigeobjekt von dem zweiten vorbestimmten Teilbereich 18 eingeblendet werden soll. Weiterhin können um diesen Effekt entgegenzuwirken die Anzeigeoberflächen 12, 14 jeweils bereichsweise unterschiedliche Reflexionsgrade aufweisen. In einem von dem zweiten vorbestimmten Teilbereich 18 weiter entfernteren Bereich der Anzeigeoberfläche 12, 14 kann diese dann einen größeren Reflexionsgrad aufweisen. Aus Sicht des Betrachters 20 werden die unterschiedlichen Anzeigeobjekte auf mehreren Anzeigeebenen 1', 2', 3', 4', 5', 6' hintereinander verteilt dargestellt, wobei die Anzeigeobjekte mit zunehmenden Abstand 22 gleichbleibend hell oder nur geringfügig dunkler erscheinen.

In Fig. 1b sind verschiedene Beispiele für mögliche Einbaumöglichkeiten der Kraftfahrzeug-Anzeigevorrichtung 10 in einem Kraftfahrzeug 24 dargestellt. Hierzu zeigt Fig. 1b eine schematische Seitenansicht eines lediglich teilweise dargestellten Kraftfahrzeugs 24 mit drei beispielhaften Anordnungen der Kraftfahrzeug-Anzeigevorrichtung 10 im Kraftfahrzeug 24. Die Kraftfahrzeug-Anzeigevorrichtung 10 kann in einer Scheibenwurzel 30 des Kraftfahrzeugs 24 eingebaut sein, sodass ein Betrachter 20, welcher in einem Fahrersitz des Kraftfahrzeugs 24 sitzt und seinen Blickwinkel auf ein Armaturenbrett 28 und/oder eine Windschutzscheibe 32 richtet, die virtuellen Anzeigeebenen 1', 2', 3', 4', 5', 6' in dem zweiten vorbestimmten Teilbereich 18 einsehen kann. Zusätzlich oder alternativ kann eine Kraftfahrzeug-Anzeigevorrichtung 10 in einer Mittelkonsole des Kraftfahrzeugs 24 angeordnet sein. Weiterhin kann eine weitere Kraftfahrzeug-Anzeigevorrichtung 10 in einem Fahrersitz und/oder einem Beifahrersitz des Kraftfahrzeugs 24 angeordnet sein, sodass ein Betrachter 20, welcher auf einer Rückbank des Kraftfahrzeugs 24 sitzt, die virtuellen Anzeigeebenen 1', 2', 3', 4', 5', 6' in dem zweiten vorbestimmten Teilbereich 18 der Kraftfahrzeug-Anzeigevorrichtung 10 einsehen kann.

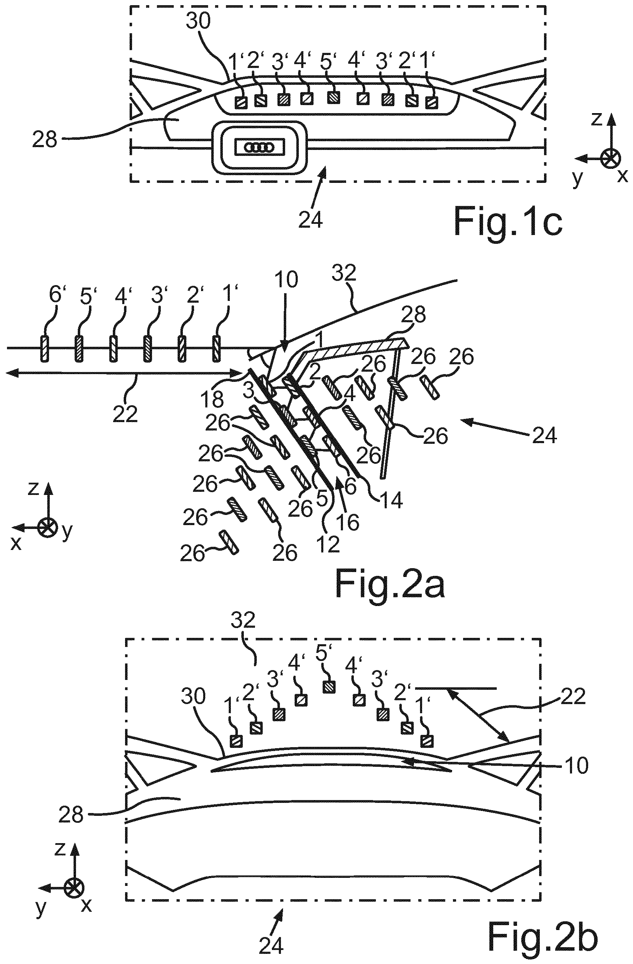

In Fig. 1c ist ein Beispiel gegeben, was ein Betrachter in dem Fall, dass die Kraftfahrzeug-Anzeigevorrichtung 10 in dem Armaturenbrett 28 angeordnet ist, sehen könnte. Hierzu zeigt Fig. 1c eine schematische Darstellung einer lediglich teilweise dargestellten Vorderansicht eines Innenraums des Kraftfahrzeugs 24 mit einem Armaturenbrett 28, innerhalb welchen die Kraftfahrzeug-Anzeigevorrichtung 10 zumindest teilweise aufgenommen ist. Weiterhin zeigt Fig. 1c die Vielzahl von virtuellen Anzeigeebenen 1', 2', 3', 4', 5', welche durch die Spiegelungen in den beiden Anzeigeoberflächen 12, 14 entstehen. Die Kraftfahrzeug-Anzeigevorrichtung 10 kann fast vollständig durch das Armaturenbrett 28 kaschiert sein und es kann lediglich der zweite vorbestimmte Teilbereich 18 aus dem Armaturenbrett 28 hervorstehen und/oder einsehbar sein. In dem dargestellten Beispiel erscheint für den Betrachter 20 des zweiten vorbestimmten Teilbereiches 18 der Kraftfahrzeug-Anzeigevorrichtung 10 die Anzeigeebene 5' am weitesten entfernt zu sein, die Anzeigeebene 1' erscheint ihm am nächsten.

In Fig. 2a ist ein weiteres Beispiel für eine Anordnung dieser Kraftfahrzeug-Anzeigevorrichtung 10 in einem Kraftfahrzeug 24 gegeben. Hierzu zeigt Fig. 2a die Kraftfahrzeug-Anzeigevorrichtung 10 in der gleichen Seitenansicht und ebenso lediglich teilweise dargestellt wie in Fig. 1a. Weiterhin zeigt Fig. 2a eine Vielzahl von virtuellen Bilder 26, die sich durch die Spiegelung des ersten vorbestimmten Teilbereichs in den beiden Anzeigeoberflächen 12, 14 ergeben. Die zweite Anzeigeeinrichtung ist vollständig unterhalb eines Armaturenbrettes 28 angeordnet, sodass aus einem Fahrgastraum des Kraftfahrzeugs 24 die zweite Anzeigeeinrichtung uneinsehbar ist. In Fahrzeuglängsrichtung x befindet sich die Anzeigeoberfläche 14 der zweiten Anzeigeeinrichtung näher zu dem Fahrgastraum als die Anzeigeoberfläche 12 der ersten Anzeigeeinrichtung. Der zweite vorbestimmte Teilbereich 18 der Anzeigeoberfläche 12 der ersten Anzeigeeinrichtung schaut aus dem Armaturenbrett 28 hervor, während der restliche Bereich dieser Anzeigeoberfläche 12 ebenfalls innerhalb des Armaturenbrettes 28 aufgenommen ist. Hierdurch ist der Spiegelschacht 16 größtenteils durch ein von außerhalb des Spiegelschachts 16 einfallendes Licht geschützt. Der zweite vorbestimmte Teilbereich 18 befindet sich in einer Scheibenwurzel 30 des Kraftfahrzeugs 24, also demjenigen Bereich des Armaturenbrettes 28, an welchem eine Windschutzscheibe 32 des Kraftfahrzeugs 24 angrenzt. Die Windschutzscheibe 32 dient als ein Umlenkelement 32 der Kraftfahrzeug-Anzeigevorrichtung 10. Das Licht der virtuellen Bilder 26 der verschiedenen Anzeigeobjekte, welches zu dem zweiten vorbestimmten Teilbereich 18 hin reflektiert wird, trifft auf eine Oberfläche der Windschutzscheibe 32 im Innenraum des Kraftfahrzeugs 24. Daraufhin wird dieses Licht durch die Windschutzscheibe 32 umgelenkt, sodass die virtuellen Bilder der Anzeigeobjekte auf einer Vielzahl von virtuellen Anzeigeebenen 1', 2', 3', 4', 5', 6' in Fahrzeuglängsrichtung x hinter der Windschutzscheibe 32 angezeigt werden. Somit kann für einen Fahrer oder ein Beifahrer des Kraftfahrzeugs 24 in einem auf die Windschutzscheibe 32 gerichteten Blickwinkel Informationen durch die Anzeigeobjekte direkt auf die Windschutzscheibe 32 angezeigt werden.

Eine mögliche Sicht aus einer Perspektive eines Fahrers oder eines Beifahrers innerhalb des Kraftfahrzeugs 24 ist schematisch in Fig. 2b dargestellt. Aus dem Armaturenbrett 28 steht lediglich der zweite vorbestimmte Teilbereich 18 der Anzeigeoberfläche 12 der ersten Anzeigeeinrichtung hervor. Diese kann so nah wie möglich an der Scheibenwurzel 30 angeordnet sein. Auf der Windschutzscheibe 32 wird eine Vielzahl von virtuellen Anzeigeobjekten angezeigt, wobei diese Anzeigeobjekte voneinander unterschiedliche Abstände 22 zu der Windschutzscheibe 32 aufweisen. Hier dargestellt sind insgesamt fünf Anzeigeebenen 1', 2', 3', 4', 5', wobei auf den vier vorderen Anzeigeebenen 1', 2', 3', 4' jeweils zwei Anzeigeobjekte dargestellt werden können. Die Anzeigeebene 5' erscheint für den Betrachter 20 der Windschutzscheibe 32 am weitesten entfernt zu sein, die Anzeigeebene 1' erscheint ihm am nächsten. Durch die Vielzahl an Anzeigeebenen 1', 2', 3', 4', 5' ergibt sich eine besonders realistische Darstellung der Anzeigeobjekte im dreidimensionalen Raum.

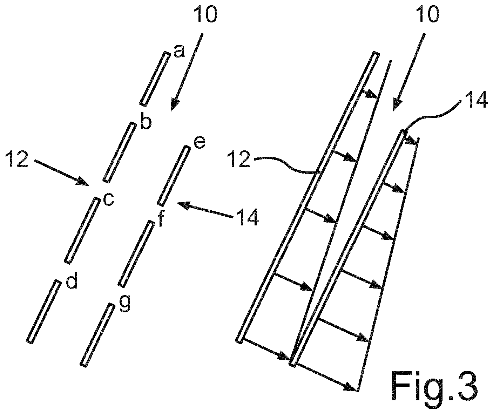

Fig. 3 zeigt eine schematische Seitenansicht zweier Ausführungsformen der in beiden Fällen lediglich teilweise dargestellten Kraftfahrzeug-Anzeigevorrichtung 10. Wie auf der linken Seite der Fig. 3 dargestellt, können die beiden Anzeigeoberflächen 12 und 14 jeweils gestückelt sein. Mit anderen Worten setzt sich eine Anzeigeoberfläche 12, 14 aus mehreren Teilstücken a, b, c, d, e, f, g zusammen. Beispielsweise sind die Teilstücke a, b, c, d, e, f, g untereinander räumlich durch jeweils eine Lücke voneinander getrennt. Falls die Anzeigeoberflächen 12 und 14 jeweils als Displays ausgebildet sind, setzt sich jeweils eine Anzeigeoberfläche 12, 14 aus mehreren Displays a, b, c, d, e, f, g zusammen. Die Displays a, b, c, d, e, f, g können unterschiedliche Spiegeleigenschaften und/oder unterschiedliche Helligkeiten aufweisen. Beispielsweise sind die Displays d und g am hellsten und die Displays a und e am dunkelsten unter den gesamten Helligkeiten der Displays a, b, c, d, e, f, g. Mit anderen Worten nimmt in Richtung der Displays a, b, c und d die Helligkeit des jeweiligen Displays immer mehr zu. In gleicher Weise kann auch die Helligkeit der Displays e, f und g jeweils zunehmen. Hierdurch wird ein Helligkeits-Verlust durch die immer größer werdende Anzahl von Spiegelungen in Richtung des zweiten vorbestimmten Teilbereichs 18 kompensiert.

Auf der rechten Seite der Fig. 3 sind die beiden Anzeigeoberflächen 12 und 14 der Kraftfahrzeug-Anzeigevorrichtung 10 in einer Seitenansicht dargestellt. Die Anzeigeoberflächen 12, 14 sind jeweils einstückig ausgebildet, beispielsweise jeweils als ein einziger Display. Die dargestellten Pfeile stellen jeweils eine Intensität der Helligkeit und/der eine Leuchtintensität der jeweiligen Anzeigeoberfläche 12, 14 dar, wobei ein längerer Pfeil eine größere Helligkeit und/oder Leuchtintensität bedeutet. Für jede Anzeigeoberfläche 12, 14 nimmt die Helligkeit der Anzeigeoberfläche 12, 14 linear in Längsrichtung der jeweiligen Anzeigeoberfläche 12, 14 zu. Auch hierdurch kann ein Helligkeits-Verlust durch die immer größer werdende Anzahl von Spiegelungen in Richtung des zweiten vorbestimmten Teilbereichs 18 kompensiert werden.

Insgesamt zeigen die Beispiele, wie durch die Erfindung eine Kraftfahrzeug-Anzeigevorrichtung bereitgestellt werden kann, welche Informationen und Inhalte für einen Kraftfahrzeuginsassen besonders realistisch und bedienerfreundlich anzeigt.

## Patentansprüche

1. Kraftfahrzeug-Anzeigevorrichtung (10) zum Anzeigen wenigstens eines Anzeigeobjekts, umfassend eine erste Anzeigeeinrichtung und eine zweite Anzeigeeinrichtung mit jeweils einer Anzeigeoberfläche (12, 14), wobei zumindest eine der beiden Anzeigeeinrichtungen dazu eingerichtet ist, das wenigstens eine Anzeigeobjekt in einem ersten vorbestimmten Teilbereich (1, 2, 3, 4, 5, 6) auf der jeweiligen Anzeigeoberfläche (12, 14) zu erzeugen,
wobei
- die jeweiligen Anzeigeoberflächen (12, 14) als spiegelnde Anzeigeoberflächen ausgebildet sind; und
- die jeweiligen Anzeigeoberflächen (12, 14) parallel zueinander angeordnet und derart einander zugewandt sind, dass sich zwischen den jeweiligen Anzeigeoberflächen (12, 14) der ersten Anzeigeeinrichtung und der zweiten Anzeigeeinrichtung ein Spiegelschacht (16) ausbildet, sodass sich die Anzeigeoberflächen (12, 14) innerhalb des Spiegelschachts (16) ineinander spiegeln; wobei
- zumindest ein zweiter vorbestimmter Teilbereich (18) der Anzeigeoberfläche (12) der ersten Anzeigeeinrichtung außerhalb des Spiegelschachts (16) angeordnet ist; wobei
- die Kraftfahrzeug-Anzeigevorrichtung (10) dazu eingerichtet ist, das wenigstens eine in dem ersten vorbestimmten Teilbereich (1, 2, 3, 4, 5, 6) erzeugte Anzeigeobjekt nach einer vorgebbaren Anzahl von Spiegelungen innerhalb des Spiegelschachts (16) in den zweiten vorbestimmten Teilbereich (18) der ersten Anzeigeeinrichtung zu spiegeln;
**dadurch gekennzeichnet, dass**
die jeweiligen Anzeigeoberflächen (12, 14) einstückig, jeweils als ein einziges Display, ausgebildet sind; und
zumindest eine der beiden Anzeigeeinrichtungen dazu eingerichtet ist, je nach Position, an welcher das wenigstens eine Anzeigeobjekt eingeblendet werden soll, eine Helligkeit des zu einblendenden Anzeigeobjekts zu verändern, wobei zumindest eine der beiden Anzeigeeinrichtungen dazu eingerichtet ist, entlang einer Längsrichtung eine jeweilige Helligkeit der jeweiligen Anzeigeeinrichtung zu variieren und das Anzeigeobjekt umso heller in dem ersten vorbestimmten Teilbereich (1, 2, 3, 4, 5, 6) einzublenden, je größer der Abstand des ersten vorbestimmten Teilbereichs (1, 2, 3, 4, 5, 6) zu dem zweiten vorbestimmten Teilbereich (18) ist.

2. Kraftfahrzeug-Anzeigevorrichtung (10) nach Anspruch 1, wobei in Abhängigkeit von einer Position des ersten vorbestimmten Teilbereichs (1, 2, 3, 4, 5, 6) des wenigstens einen Anzeigeobjekts auf der jeweiligen Anzeigeoberfläche (12, 14) ein Abstand (22) einer virtuellen Anzeigeebene (1', 2', 3', 4', 5', 6'), auf welcher das wenigstens eine Anzeigeobjekt angezeigt wird, zu der Anzeigeoberfläche (12) der ersten Anzeigeeinrichtung einstellbar ist.

3. Kraftfahrzeug-Anzeigevorrichtung (10) nach einem der vorhergehenden Ansprüche, wobei die Kraftfahrzeug-Anzeigevorrichtung (10) eine Lichtabschirmung (28) umfasst, welche sich derart entlang zumindest einer an den beiden Anzeigeoberflächen (12, 14) angrenzenden Fläche erstreckt, dass der Spiegelschacht (16) von einem außerhalb des Spiegelschachts (16) einfallendem Licht durch die Lichtabschirmung (28) zumindest teilweise abgeschirmt ist.

4. Kraftfahrzeug-Anzeigevorrichtung (10) nach einem der vorhergehenden Ansprüche, wobei die Kraftfahrzeug-Anzeigevorrichtung (10) ein Umlenkelement (32) umfasst, welches derart zu dem zweiten vorbestimmten Teilbereich (18) der ersten Anzeigeeinrichtung gewandt ist, dass das wenigstens eine in den zweiten vorbestimmten Teilbereich (18) gespiegelte Anzeigeobjekt zu dem Umlenkelement (32) hin gespiegelt wird, wobei das Umlenkelement (32) dazu eingerichtet ist, das auf das Umlenkelement (32) hin gespiegelte wenigstens eine Anzeigeobjekt derart umzulenken, dass das wenigstens eine Anzeigeobjekt auf zumindest einer virtuellen Anzeigeebene (1', 2', 3', 4', 5', 6'), welche einen vorbestimmten Schnittwinkel zu einer zu den Anzeigeoberflächen (12, 14) parallelen Ebene ausbildet, angezeigt wird.

5. Kraftfahrzeug-Anzeigevorrichtung (10) nach einem der vorhergehenden Ansprüche, wobei die Anzeigeoberfläche (12, 14) zumindest einer der beiden Anzeigeeinrichtungen in einer Längsrichtung der jeweiligen Anzeigeeinrichtung unterschiedliche Reflexionsgrade aufweist.

6. Kraftfahrzeug (24) mit einer Kraftfahrzeug-Anzeigevorrichtung (10) nach einem der vorhergehenden Ansprüche.

7. Kraftfahrzeug (24) nach Anspruch 6, insbesondere in Rückbezug auf Anspruch 3, wobei die Lichtabschirmung (28) zumindest teilweise durch zumindest einen Teilbereich eines Armaturenbretts (28) des Kraftfahrzeugs (24) bereitgestellt ist.

8. Kraftfahrzeug (24) nach einem der Ansprüche 6 oder 7, insbesondere in Rückbezug auf Anspruch 4, wobei das Umlenkelement (32) als zumindest ein Teilbereich einer Windschutzscheibe (32) des Kraftfahrzeugs (24) ausgebildet ist.

9. Kraftfahrzeug (24) nach einem der Ansprüche 6 bis 8, wobei die jeweilige Anzeigeoberfläche (12, 14) der beiden Anzeigeeinrichtungen sich in Fahrzeugquerrichtung (y) von einem Fahrersitzbereich bis zu einem Beifahrersitzbereich erstreckt.

## Claims

1. Motor vehicle display device (10) for displaying at least one display object, comprising a first display apparatus and a second display apparatus, each having a display surface (12, 14), wherein at least one of the two display apparatuses is configured to produce the at least one display object in a first predetermined sub-region (1, 2, 3, 4, 5, 6) on the respective display surface (12, 14),
wherein
- the respective display surfaces (12, 14) are designed as mirroring display surfaces; and
- the respective display surfaces (12, 14) are arranged parallel to each other and facing each other such that a mirror shaft (16) is formed between the respective display surfaces (12, 14) of the first display apparatus and of the second display apparatus, such that the display surfaces (12, 14) are mirrored in one another inside the mirror shaft (16) ; wherein
- at least a second predetermined sub-region (18) of the display surface (12) of the first display apparatus is arranged outside the mirror shaft (16); wherein
- the motor vehicle display device (10) is configured to mirror the at least one display object produced in the first predetermined sub-region (1, 2, 3, 4, 5, 6), after a predefinable number of mirrorings inside the mirror shaft (16), in the second predetermined sub-region (18) of the first display apparatus;
**characterised in that**
the respective display surfaces (12, 14) are designed in one piece, in each case as a single display; and
at least one of the two display apparatuses is configured to change a brightness of the display object to be shown depending on the position at which the at least one display object is to be shown, wherein at least one of the two display apparatuses is configured to vary a respective brightness of the respective display object along a longitudinal direction and to show the display object brighter in the first predetermined sub-region (1, 2, 3, 4, 5, 6) the greater the distance from the first predetermined sub-region (1, 2, 3, 4, 5, 6) to the second predetermined sub-region (18).

2. Motor vehicle display device (10) according to claim 1,
wherein
a distance (22) from a virtual display plane (1', 2', 3', 4', 5', 6'), on which the at least one display object is displayed, to the display surface (12) of the first display apparatus can be adjusted depending on a position of the first predetermined sub-region (1, 2, 3, 4, 5, 6) of the at least one display object on the respective display surface (12, 14).

3. Motor vehicle display device (10) according to any of the preceding claims,
wherein
the motor vehicle display device (10) comprises a light shield (28) which extends along at least one surface adjoining the two display surfaces (12, 14) in such a way that the mirror shaft (16) is at least partially shielded by the light shield (28) from a light incident outside the mirror shaft (16).

4. Motor vehicle display device (10) according to any of the preceding claims,
wherein
the motor vehicle display device (10) comprises a deflecting element (32) which faces the second predetermined sub-region (18) of the first display device in such a way that the at least one display object mirrored in the second predetermined sub-region (18) is mirrored into the deflecting element (32), wherein the deflecting element (32) is configured to deflect the at least one display object mirrored onto the deflecting element (32) in such a way that the at least one display object is displayed on at least one virtual display plane (1', 2', 3', 4', 5', 6'), which forms a predetermined intersection angle with a plane parallel to the display surfaces (12, 14).

5. Motor vehicle display device (10) according to any of the preceding claims,
wherein
the display surface (12, 14) of at least one of the two display apparatuses has different degrees of reflection in a longitudinal direction of the respective display apparatus.

6. Motor vehicle (24) having a motor vehicle display device (10) according to any of the preceding claims.

7. Motor vehicle (24) according to claim 6, in particular with reference to claim 3, wherein the light shield (28) is at least partially provided by at least a sub-region of a dashboard (28) of the motor vehicle (24).

8. Motor vehicle (24) according to any of claims 6 or 7, in particular with reference to claim 4, wherein the deflecting element (32) is designed as at least a sub-region of a windscreen (32) of the motor vehicle (24).

9. Motor vehicle (24) according to any of claims 6 to 8, wherein the respective display surface (12, 14) of the two display devices extends in the vehicle transverse direction (y) from a driver seat region to a passenger seat region.

## Revendications

1. Dispositif d'affichage de véhicule à moteur (10) pour afficher au moins un objet d'affichage, comprenant un premier appareil d'affichage et un second appareil d'affichage, avec une surface d'affichage respective (12, 14), dans lequel au moins l'un des deux appareils d'affichage est conçu pour générer au moins un objet d'affichage dans une première zone partielle prédéterminée (1, 2, 3, 4, 5, 6) sur la surface d'affichage respective (12, 14),
dans lequel
- les surfaces d'affichage respectives (12, 14) sont réalisées sous la forme de surfaces d'affichage spéculaires ; et
- les surfaces d'affichage respectives (12, 14) sont agencés parallèles l'une à l'autre et se font face de telle façon qu'un puits réfléchissant (16) est formé entre les surfaces d'affichage (12, 14) respectives du premier appareil d'affichage et du second appareil d'affichage, de telle sorte que les surfaces d'affichage (12, 14) se réfléchissent l'une dans l'autre dans le puits réfléchissant (16) ; dans lequel
- au moins une seconde zone partielle prédéterminée (18) de la surface d'affichage (12) du premier appareil d'affichage est agencée à l'extérieur du puits réfléchissant (16) ; dans lequel
- le dispositif d'affichage de véhicule à moteur (10) est conçu pour réfléchir au moins un objet d'affichage généré dans la première zone partielle prédéterminée (1, 2, 3, 4, 5, 6) après un nombre prédéfini de réflexions à l'intérieur de puits réfléchissant (16) dans la seconde zone partielle prédéterminée (18) du premier appareil d'affichage ;
**caractérisé en ce que**
les surfaces d'affichage respectives (12, 14) sont formées d'une seule pièce, chacune sous la forme d'un affichage unique ; et
au moins l'un des deux appareils d'affichage est conçu pour modifier une luminosité de l'objet d'affichage à incruster en fonction de la position dans laquelle le au moins un objet d'affichage doit être incrusté, dans lequel au moins l'un des deux appareils d'affichage est conçu pour faire varier une luminosité respective de l'appareil d'affichage respectif le long d'une direction longitudinale, et incruster l'objet d'affichage d'autant plus clair dans la première zone partielle prédéterminée (1, 2, 3, 4, 5, 6) que la distance entre la première zone partielle prédéterminée (1, 2, 3, 4, 5, 6) et la seconde zone partielle prédéterminée (18) est grande.

2. Dispositif d'affichage de véhicule à moteur (10) selon la revendication 1, dans lequel en fonction d'une position de la première zone partielle prédéterminée (1, 2, 3, 4, 5, 6) du au moins un objet d'affichage sur la surface d'affichage respective (12, 14), une distance (22) d'un plan d'affichage virtuel (1', 2', 3', 4', 5', 6'), sur lequel le au moins un objet d'affichage va être affichée, par rapport à la surface d'affichage (12) du premier appareil d'affichage peut être réglée.

3. Dispositif d'affichage de véhicule à moteur (10) selon l'une des revendications précédentes, dans lequel le dispositif d'affichage de véhicule à moteur (10) comprend un pare-lumière (28), qui s'étend le long d'au moins une surface contiguë aux deux surfaces d'affichage (12, 14), de telle sorte que le puits réfléchissant (16) est protégé au moins partiellement d'une lumière incidente à l'extérieur du puits réfléchissant (16) à travers le pare-lumière (28).

4. Dispositif d'affichage de véhicule à moteur (10) selon l'une des revendications précédentes, dans lequel le dispositif d'affichage de véhicule à moteur (10) comprend un élément déflecteur (32) qui fait face à la seconde zone partielle prédéterminée (18) du premier appareil d'affichage de telle sorte que le au moins un objet d'affichage réfléchi dans la seconde zone partielle prédéterminée (18) va être réfléchi jusqu'à l'élément déflecteur (32), dans lequel l'élément déflecteur (32) est conçu pour dévier au moins un objet d'affichage réfléchi sur l'élément déflecteur (32) de telle sorte que le au moins un objet d'affichage va être affiché sur au moins un plan d'affichage virtuel (1', 2', 3', 4', 5', 6'), qui forme un angle d'intersection prédéterminé avec un plan parallèle aux surfaces d'affichage (12, 14).

5. Dispositif d'affichage de véhicule à moteur (10) selon l'une des revendications précédentes, dans lequel la surface d'affichage (12, 14) d'au moins l'un des deux appareils d'affichage présente des degrés de réflexion différents dans une direction longitudinale du dispositif d'affichage respectif.

6. Véhicule à moteur (24) avec un dispositif d'affichage de véhicule à moteur (10) selon l'une des revendications précédentes.

7. Véhicule à moteur (24) selon la revendication 6, en particulier lorsqu'elle dépend de la revendication 3, dans lequel le pare-lumière (28) est fourni au moins partiellement par au moins une zone partielle du tableau de bord (28) du véhicule à moteur (24).

8. Véhicule à moteur (24) selon l'une des revendications 6 ou 7, en particulier lorsqu'elle dépend de la revendication 4, dans lequel l'élément déflecteur (32) est réalisé sous la forme d'au moins une zone partielle du pare-brise (32) du véhicule à moteur (24).

9. Véhicule à moteur (24) selon l'une des revendications 6 à 8, dans lequel les surfaces d'affichage respectives (12, 14) des deux dispositifs d'affichage s'étendent dans la direction (y) transversale du véhicule d'une zone de siège conducteur à une zone de siège passager.
